# EUROPEAN PATENT SPECIFICATION

(11) **EP 0 605 404 B1**
(45) Date of publication and mention of the grant of the patent: **08.12.1999**
(21) Application number: 94200570.3
(22) Date of filing: 15.09.1989
(51) Int. Cl.: C09B 57/00, D06P 3/54, C07D 493/04

(54) **Polycyclic dyes**
Polycyklische Farbstoffe
Colorants polycycliques

(30) Priority: 03.10.1988 GB 8823158
(43) Date of publication of application: 06.07.1994
(62) Divisional of application: 89309417.7
(73) Proprietor: BASF AKTIENGESELLSCHAFT, 67056 Ludwigshafen (DE)
(72) Inventor: Kenyon, Ronald Wynford, Failsworth, Manchester M35 0GW (GB); Newton, David Francis, Shaw, Lancashire OL2 7RF (GB); Thorp, Derek, Heywood, Lancashire OL10 2NZ (GB)
(74) Representative: Kiddle, Simon John

(56) References cited:
- EP-A- 0 033 583
- EP-A- 0 146 269
- EP-A- 0 252 406
- FR-A- 2 343 785

## Description

This specification describes an invention relating to certain polycyclic dyes.

EP-A-0252406 discloses a range of polycyclic dyes prepared by a process in which an α-keto acid or derivative is reacted with a benzofuranone. A specific example is 3-phenyl-7-(4-N,N-dimethylaminophenyl)-2,6-dioxo-2,6-dihydrobenzo[1:2-b; 4:5-b']-difuran.

EP-A-0033583 discloses a range of 3,7-diphenyl-2,6-dioxo-2,6-dihydrobenzo[1:2-b; 4:5-b']-difuran dyes, processes for their preparation and their use in the coloration of synthetic textile materials. At least one of the phenyl groups is substituted such that the dyes are asymmetrical. An optional substituent is a primary, secondary or tertiary amino group. FR-A-2343785 discloses a range symmetrical 3,7-diphenyl-2,6-dioxo-2,6-dihydrobenzo[1:2-b; 4:5-b']-difuran dyes and their use in the coloration of synthetic textile materials. An example of a 3,7-di[N,N-diethylaminophenyl] compound is given.

Our copending EP-A-0363034 discloses a process for the preparation of a polycyclic dye of the Formula I: 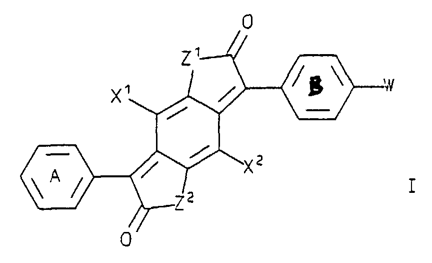 by reacting a phenyltartronic acid of Formula II: 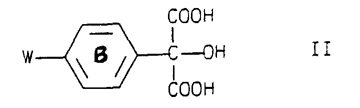 wherein:
- W: is -NR¹R² or -OR³;
- R³: is H or an optionally substituted alkyl, alkenyl, cycloalkyl or aralkyl group;
- R¹ and R²: each independently is H, or an optionally substituted alkyl, alkenyl, cycloalkyl, aralkyl or aryl group; or
- R¹ and R²: together with the nitrogen atom to which they are attached form a heterocyclic ring; or
- R¹ or R²: together with the nitrogen atom and the adjacent carbon atom of Ring B form a heterocyclic ring; and
- Ring B: is unsubstituted, apart from the group W, or is substituted by one or two further groups;
with either (a) a compound of the Formula III: 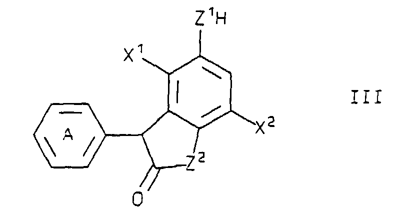 wherein:
- Z¹ and Z²: each independently is -O-, -S- or -NY- in which Y is H, an optionally-substituted hydrocarbon group or an acyl group;
- X¹ and X²: each independently is H, halogen, cyano, alkyl, aryl, carbamoyl, sulphamoyl, COOH or carboxylic acid ester; &
- Ring A: is unsubstituted or is substituted by from one to three groups;
or (b) a compound of the Formula IV: 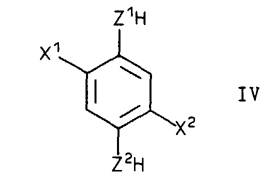 wherein:
Z¹, Z², X¹ and X² are as hereinbefore defined;
and oxidation of the intermediate compound to dehydrogenate the peripheral heterocyclic rings.

The optionally substituted hydrocarbon group represented by Y is preferably C₁₋₈-alkyl, and more preferably C₁₋₄-alkyl, or monocyclic aryl, more preferably phenyl. The acyl group represented by Y is preferably C₁₋₄-alkyl- or monocyclic-aryl-carbonyl or -sulphonyl which may be substituted by one or more groups selected from hydroxy, halogen, nitro, C₁₋₄-alkyl and C₁₋₄-alkoxy. Examples of the optionally substituted hydrocarbon groups represented by Y are alkyl and preferably C₁₋₄-alkyl, such as methyl, ethyl, n-propyl and iso-propyl; substituted alkyl, preferably substituted C₁₋₄-alkyl, such as β-hydroxyethyl, β-methoxyethyl and β-ethoxyethyl; phenyl and substituted phenyl such as tolyl, chlorophenyl, nitrophenyl and C₁₋₄-alkoxyphenyl. Examples of the acyl groups represented by Y are acetyl, propionyl, n-butyryl, iso-butyryl, benzoyl and nitrobenzoyl, chlorobenzoyl, methylbenzoyl, methoxybenzoyl and hydroxybenzoyl.

The aryl group represented by X¹ or X² is preferably monohomocyclic aryl, that is phenyl and substituted phenyl. The C₁₋₄-alkyl and alkoxy groups represented by X¹ or X² may also be substituted and suitable substituents for these and the aryl group are hydroxy, halogen, nitro, C₁₋₄-alkyl and C₁₋₄-alkoxy. The halogen represented by X¹ or X² is preferably chlorine or bromine.

The carbamoyl and sulphamoyl groups represented by X¹ or X² are preferably of the formula -CONL¹L² or -SO₂NL¹L² wherein L¹ and L² are each independently hydrogen, C₁₋₄-alkyl or monocyclic aryl, preferably phenyl. The carboxylic acid ester groups represented by X¹ and X² are preferably of the formula -COOL³ wherein L³ is optionally substituted alkyl, especially C₁₋₄-alkyl, or monocyclic aryl, especially phenyl, in which the substituents are as defined above.

When any of R¹ to R³ is alkyl or alkenyl it preferably contains up to 20, more preferably up to 10 carbon atoms and especially up to 4, carbon atoms, with a preferred minimum of 3 carbon atoms for alkenyl groups); when cycloalkyl it is preferably C₄₋₈-cycloalkyl, such as cyclohexyl; and when aryl or aralkyl, the aryl is preferably monohomocyclic aryl, i.e. phenyl, and the aralkyl is preferably phenyl-C₁₋₄-alkylene, such as benzyl and phenylethyl. Where the groups represented by R¹ to R³ are substituted, examples of preferred substituents are alkyl, alkoxy, nitro, halogen, alkoxyalkoxy, cyclohexyl, phenyl, diphenyl, hydroxy, alkylcarbonyl, alkoxycarbonyl, alkoxyalkoxycarbonyl, alkoxycarbonyloxy, alkoxyalkoxycarbonyloxy, alkylcarbonyloxy, cyano and amino in which each alkyl is preferably C₁₋₄-alkyl. Where the groups represented by R¹ and R², together with the nitrogen atom to which they are attached, form a heterocyclic group this is preferably alicyclic, such as piperidino or morpholino. Where a group represented by R¹ or R² together with the nitrogen atom to which it is attached and an adjacent carbon atom of Ring B or Ring A form a heterocyclic group fused to Ring B or Ring A respectively, this is preferably a 6-membered heteroaliphatic ring, i.e. R¹ or R² is trimethylene, and the combined fused rings preferably form a tetrahydroquinolyl group.

It is preferred that the compound of Formula I is "unsymmetrical" by virtue of differences in the definitions of Z¹ and Z², X¹ and X² and/or Ring A and Ring B, because lack of symmetry generally gives rise to an improvement in dyeing performance, especially in build-up on the fibre. However, it is generally preferred that Z¹ and Z² are identical and X¹ and X² are identical and that the lack of symmetry arises from differences in Rings A and B. Where Ring A and Ring B are different, the difference preferably lies in the nature and/or the number of substituents carried by each ring. The difference lies preferably in the identity of the groups R¹ to R³ but may lie in the identity and/or the number of the substituents carried by the rings. Examples of further substituents for Ring B, in addition to the group W, are alkyl; alkenyl; alkoxy; alkoxyalkoxy; alkoxycarbonyalkoxy; alkoxyalkoxycarbonylalkoxy; alkylcarbonyloxyalkoxy; cyanoalkoxy, hydroxyalkoxy; halogen, especially chlorine or bromine; hydroxy; alkylthio; arylthio; aryloxy; alkylcarbonyl and alkylsulphonyl; and especially such groups in which the alkyl or alkenyl contains up to 4 carbon atoms and the aryl is phenyl. Examples of substituents for Ring A, in addition to those listed above for Ring B, are NR¹R², OR³ and NHacyl, especially NHCOC₁₋₄-alkyl and -NHSC₃C₁₋₄-alkyl.

It is preferred that X¹ and X² are both hydrogen and also preferred that Z¹ and Z² are both oxygen. When both these pairs of groups are identical, the preferred asymmetry in the compound of Formula I is provided by differences in Rings A and B. By this is meant that there is either a different number or different pattern of substituents on each ring.

The present process may be performed by heating the reactants in a melt but preferably in an acidic medium, preferably an organic acid, and especially an alkanecarboxylic acid such as acetic acid, propionic acid or butyric acid.

It is preferred to perform the process in which W is OR³ in the presence of a strong acid catalyst, especially H₂SO₄. However, where W is NR¹R² such a catalyst is not generally required and is believed to have an adverse effect on the process.

The process is preferably performed at a temperature from 50°C to 100°C, especially 70°C to 100°C, where a solvent is present, conveniently under reflux. Reaction is preferably continued until all the starting materials are consumed which can take up to 25 hours.

Further reactions of the dyes in which any or all of R¹, R² and R³ are H with alkylating, arylating or acylating agents permits the preparation of a wide range of substituted hydroxy and amino (secondary and tertiary amino) groups.

The final oxidation step may be effected by any convenient oxidising agent for dehydrogenating a carbon-carbon single bond, such as a persulphate or hydrogen peroxide.

The compound of Formula III, in which Ring A also carries a group NR¹R², may be prepared by the reaction of an amino-mandelic acid (in which the amino group is protected, if necessary, by acylation) with a hydroquinone in accordance with the procedures described in GB-A-2 068 402.

EP-A-0 363 034 also discloses a process for the preparation of a compound according to Formula III in which Ring A carries a group NR¹R² in the 4-position which comprises reacting a mandelic acid of the Formula V: 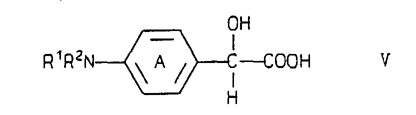 wherein A has the same meaning as in Formula I with a compound of the Formula VI: 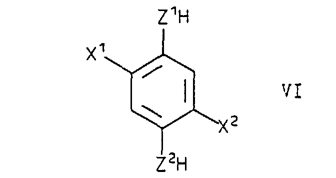 wherein X¹ and X² have the same meanings as in Formula I. It is preferred that, in Formula VI, X¹ and X² are both hydrogen.

This reaction is conveniently performed in an acidic medium in the presence of a strong acid catalyst as described above for the preparation of the compound of Formula I but at a lower temperature in the range 40°C to 80°C especially from 49°C to 75°C.

The present process is especially suitable for the preparation of compounds of Formula I in which:
(a) Ring B carries a group, NR¹R², and both rings, optionally, carry one or more other substituents; or
(b) Rings A and B both carry a group, NR¹R², which may be the same or different, and, optionally, one or more other substituents.

According to the present invention, there is provided a compound of Formula I in which W is, specifically, NR¹R², Ring B carries a substituent, as defined below, adjacent to NR¹R² and Ring A is unsubstituted or substituted in the 4-position in the manner defined below.

Such compounds give blue shades when applied to synthetic fibres, especially polyesters, by disperse dyeing processes, and build up well to give navy shades.

According to the present invention there is provided a compound of the formula: 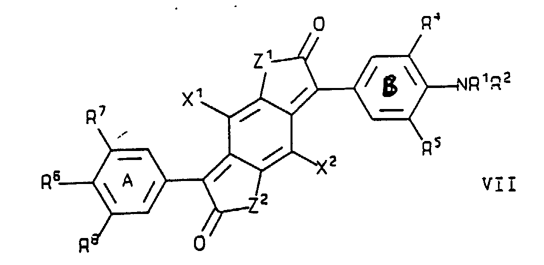 wherein:
- X¹ and X²: each independently is H, cyano, alkyl, aryl, carbamoyl, sulphamoyl, COOH or carboxylic acid ester;
- Z¹ and Z²: each independently is -O-, -S- or -NY- in which Y is H, an optionally-substituted hydrocarbon group or an acyl group;
one of R¹ and R² is H or an optionally substituted alkyl, alkenyl, cycloalkyl, aryl or aralkyl group;
and
the other of R¹ and R² is H;
- R⁴ and R⁵: each independently is H, halogen or an optionally substituted alkyl, alkenyl or alkoxy group, provided that at least one of R⁴ and R⁵ is other than hydrogen; or
- R¹ and R⁴: together with the N atom and the two carbon atoms in Ring B to which they are attached form a heterocycle fused to Ring B; or
- R² and R⁵: together with the N atom and the two carbon atoms in Ring B to which they are attached form a heterocycle fused to Ring B;
- R⁶: is H, halogen or an optionally substituted alkyl or alkoxy group or a group NR⁹R¹⁰ in which each of R⁹ and R¹⁰ is H or an optionally substituted alkyl, alkenyl, cycloalkyl, aryl or aralkyl group; or R⁹ and R¹⁰ together with the N atom to which they are attached form a heterocvcle.
- R⁷ and R⁸: each independently is H, halogen or an optionally substituted alkyl, alkenyl or alkoxy group provided that when R⁷ or R⁸ is other than H, one of R⁹ and R¹⁰ is H: or
- R⁷ and R⁹: together with the N atom and the two carbon atoms in Ring A to which they are attached form a heterocycle fused to Rina A; or
- R⁸ and R¹⁰: together with the N atom and the two carbon atoms in Ring A to which they are attached form a heterocycle fused to Ring A;
and where R⁶ is NR⁹R¹⁰ this may be the same as or different from the NR¹R² group present in Ring B.

In the compounds of the formula (VIII), one of R¹ and R², in the group NR¹R² substituted on Ring B or, when R⁶ is NR⁹R¹⁰, each of R⁹ and R¹⁰ in the group NR⁹R¹⁰ substituted on Ring A, may be H, C₁₋₆-alkyl, C₃₋₄-alkenyl, cyclohexyl or C₁₋₄-alkyl substituted by a group selected from C₁₋₄-alkyl, C₁₋₄-alkoxy, C₁₋₄-alkoxy-C₁₋₄-alkoxy, nitro, cyano, halogen, cyclohexyl, phenyl, diphenyl, hydroxy, C₁₋₄-alkylcarbonyl, amino C₁₋₄-alkoxycarbonyl, C₁₋₄-alkoxy-C₁₋₄-alkoxycarbonyl, C₁₋₄-alkoxycarbonyloxy or R¹ and R² together with the nitrogen atom to which they are attached form a piperidino or morpholino group. In such a range of compounds R⁴ may be C₁₋₄-alkyl, C₃₋₄-alkenyl, C₁₋₁₀-alkoxy or halogen.

It is preferred that the compound of Formula VII is "unsymmetrical" by virtue of differences in the definitions of Z¹ and Z², X¹ and X² and/or the number and pattern of substituents on Ring A and Ring B, because lack of symmetry generally gives rise to an improvement in dyeing performance, especially in build-up on the fibre. It is preferred that X¹ and X² are the same and preferably H. It is also preferred that Z¹ and Z² are the same and preferably oxygen. Where X¹ and X² are identical and Z¹ and Z² are identical it is preferred that the lack of symmetry arises from a difference in the number or pattern of substituents on Ring A and Ring B.

Preferences for the groups represented by X¹, X², Z¹ and Z² are the same as for the same groups in Formula I.

In Ring A it is preferred that R⁶ is independently selected from H, halogen, C₁₋₁₀-alkyl (which may be a C₁₋₆-alkyl), C₃₋₁₀-alkenyl (which may be a C₃₋₄-alkenyl), C₁₋₁₀-alkoxy and NR⁹R¹⁰ in which each of R⁹ and R¹⁰ is independently H; C₁₋₆-alkyl, more especially C₁₋₄-alkyl; or C₁₋₄-alkyl substituted by a group selected from alkoxy, alkoxyalkoxy, hydroxy, cyano, halogen especially chlorine or bromine, phenyl, alkoxycarbonyl, alkoxyalkoxycarbonyl and alkylcarbonyloxy in which all the alkyl groups preferably contain up to 4 carbon atoms. In one subgroup of such compounds, R⁶ is H, C₁₋₆-alkyl, C₃₋₄-alkyl, C₁₋₁₀-alkoxy or halogen and R⁴ (in Ring B) is C₁₋₄-alkyl or C₁₋₄-alkoxy. Alternatively either R⁹ and R⁷ or R¹⁰ and R⁸, together with the N atom to which R⁹ and R¹⁰ is attached and two carbon atoms in Ring A, may form a piperidine ring fused to Ring A or R⁹ and R¹⁰, together with the N atom to which they are attached, may form a pendant mono or bicyclic heterocyclic group, especially piperidine or mopholino, attached to Ring A through the N atom. Where R⁶ is not NR⁹R¹⁰, it is preferred that each of R⁷ and R⁸ is H.

In Ring B it is preferred that one of R¹ and R² independently is H; C₁₋₄-alkyl, more especially C₁₋₄alkyl; or C₁₋₄-alkyl which is optionally substituted by a group selected from alkoxy, alkoxyalkoxy, hydroxy, cyano, halogen especially chlorine or bromine, phenyl, alkoxycarbonyl, alkoxycarbonyloxy, alkoxyalkoxycarbonyl and alkylcarbonyloxy in which all the alkyl groups preferably contain up to 4 carbon atoms; or that either R¹ and R⁴ or R² and R⁵, together with the N atom to which R¹ or R² is attached and two carbon atoms in Ring B, form a piperidine ring fused to Ring B.

At least one of R⁴ and R⁵ is other than hydrogen and, especially, an alkyl or alkoxy group as hereinafter more specifically defined.

The alkyl group represented by R⁴, R⁵, R⁶, R⁷ or R⁸ is preferably C₁₋₄-alkyl, especially methyl or ethyl. The alkenyl group represented by R⁴, R⁵, R⁶, R⁷ or R⁸ is preferably C₃₋₄-alkenyl, especially allyl. The alkoxy group represented by R⁴, R⁵, R⁶, R⁷ or R⁸ is preferably an unsubstituted C₁₋₁₀-alkoxy or a C₁₋₄-alkoxy group which is substituted by a group selected from alkoxy, hydroxy, alkylcarbonyloxy, alkoxyalkoxycarbonyl, alkoxycarbonyl, halogen and cyano, in which all the alkyl groups preferably contain up to 4 carbon atoms. The halogen represented by R⁴, R⁵, R⁶, R⁷ or R⁸ is preferably chlorine or bromine.

In one preferred sub-class of the compounds of Formula VII, X¹, X² and R¹ are H; Z¹ and Z² are oxygen; R² is H or C₁₋₄-alkyl; R⁴ is C₁₋₄-alkyl or C₁₋₁₀-alkoxy, more especially C₁₋₄-alkoxy; R⁵, R⁷ and R⁸ each independently is H, C₁₋₄-alkyl or C₁₋₁₀-alkoxy, more especially C₁₋₄-alkoxy; and R⁶ is NH₂. The dyes of this preferred sub-class of Formula VII, generally give reddish-blue to turquoise shades on polyester textile materials with excellent fastness properties, especially heat and wet fastness. Within this sub-class are dyes wherein X¹, X², R¹, R⁷ and R⁸ are H. Specific examples of such dyes are:

**Table 1**

| R¹ | R² | R⁴ | R⁵ | R⁶ | R⁷ | R⁸ |
|---|---|---|---|---|---|---|
| H | H | CH3 | H | NH₂ | H | H |
| H | H | OCH₃ | H | NH₂ | H | H |
| H | H | Cl | H | NH₂ | H | H |
| H | H | C₂H₅ | H | NH₂ | H | H |
| H | H | CH₃ | CH₃ | NH₂ | H | H |

In another preferred sub-class of the compound of Formula VII, X¹, X², R¹, R⁵, R⁷ and R⁸ are H; Z¹ and Z² are oxygen; R² is C₁₋₄-alkyl; R⁴ is C₁₋₄-alkyl or C₁₋₁₀-alkoxy, more especially C₁₋₄-alkoxy; and R⁶ is H, C₁₋₄-alkyl or C₁₋₄-alkoxy. The dyes of this preferred sub-class of Formula VII build up strongly on polyester textile materials to give strong navy shades with excellent fastness properties, especially heat and wet fastness. Specific examples of such dyes are:

**Table 2**

| R¹ | R² | R⁴ | R⁵ | R⁶ | R⁷ | R⁸ |
|---|---|---|---|---|---|---|
| H | H | CH₃ | H | H | H | H |
| H | H | CH₃ | H | CH₃ | H | H |
| H | H | C₂H₅ | H | OC₃H₇ | H | H |
| H | H | n-C₃H₇ | H | C₃H₇ | H | H |
| H | H | OCH₃ | H | H | H | H |
| H | H | OC₂H₅ | H | OC₃H₇ | H | H |
| H | H | O-n-C₃H₇ | H | OC₃H₇ | H | H |
| H | C₂H₅ | CH₃ | H | H | H | H |

Examples of other dyes according to Formula VII are:

**Table 3**

| R¹ | R² | R⁴ | R⁵ | R⁶ | R⁷ | R⁸ | X¹ |
|---|---|---|---|---|---|---|---|
| H | C₂H₅ | CH₃ | H | NH₂ | H | H | H |
| H | i-C₃H₇ | CH₃ | H | NH₂ | H | H | H |
| H | H | C₂H₅ | H | NH₂ | CH₃ | H | H |
| H | -CH₂CH₂CH₂- | | H | NH₂ | H | H | H |
| H | H | CH₃ | CH₃ | NH₂ | CH₃ | H | H |
| H | C₂H₄OH | CH₃ | H | NH₂ | H | H | H |
| H | s-C₄H₉ | CH₃ | H | NH(s-C₄H₉) | H | H | H |

In Table 3 and subsequent tables s-C₄H₉ is

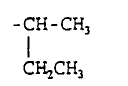

The invention is further illustrated by the following examples in which all parts and percentages are by weight unless otherwise indicated.

### Example 1

A mixture of 2.84g of 5-hydroxy-2-oxo-3- (4-acetylaminophenyl)-2,3-dihydrobenzofuran, 4.8g of 4-amino-3-methyl-phenyltartronic acid (as the dipotassium salt) and 50ml of glacial acetic acid was stirred under reflux for 18 hours. At the end of this period 2.5g of ammonium persulphate was added and heating continued for a further 1 hour. After cooling to ambient the precipitated solid was filtered, washed acid-free with water, then methanol, and dried.

A mixture of 3.6g of this product in 110ml of 70% sulphuric acid was heated at 95°C for 7 hours. After cooling, this mixture was drowned into 1 litre of water and the crude product, 3-(4-aminophenyl)-7-(3-methyl-4-aminophenyl)-2,6-dioxo-2,6-dihydrobenzo-[1:2-b, 4:5-b']-difuran, isolated by filtration. This was then extracted into pyridine, screened and the solvent removed under vacuum. The product dissolved in pyridine to give a blue solution with an absorption maximum at 657nm.

When applied to polyester material from an aqueous dispersion it gave a bright mid-blue shade with excellent heat and wet fastness properties and it also built up well.

The 5-hydroxy-2-oxo-3-(4-acetylaminophenyl)-2,3-dihydrobenzofuran used in this Example was prepared by stirring 21g of 4-acetylaminomandelic acid and llg of hydroquinone in 95ml of glacial acetic acid and 5ml 100% sulphuric acid at 55°C for 21 hours, cooling to ambient and drowning into 1 litre of water. The precipitate was isolated by filtration, washed acid-free with water and dried.

### Example 2

The procedure of Example 1 was repeated except that in place of the 4.8g of 4-amino-3-methylphenyltartronic acid there were used 4.7g of 3-methyl-4-N-ethylaminophenyltartronic acid to give 3-(4-aminophenyl)-7-(3-methyl-4-N-ethylaminophenyl)-2,6-dioxo-2,6-dihydrobenzo [1:2-b,4:5-b']difuran. This dissolved in pyridine to give a greenish-blue solution having an absorption maximum at 672nm.

When applied to a polyester textile material from an aqueous dispersion it gave a greenish blue shade having good fastness to wet treatments and it built up well.

### Example 3

The procedure of Example 1 was repeated except that in place of the 4.8g of 4-amino-3-methylphenyltartronic acid there were used 4.6g of 4-amino-3-methoxyphenyltartronic acid to give 3-(4-amino-phenyl)-7-(4-amino-3-methoxyphenyl)-2,6-dioxo-2,6-dihydrobenzo-[1:2b,4:5-b']difuran.

When applied to a polyester textile material from an aqueous dispersion it gave a greenish-blue shade with high heat fastness and very good perspiration and wash fastness.

### Example 4

The procedure described in Example 1 was repeated except that in place of the 4.8g of 4-amino-3-methylphenyltartronic acid there were used 5.0g of 4-amino-3-chlorophenyltartronic acid to give 3-(4-aminophenyl)-7-(4-amino-3-chlorophenyl)-2,6-dioxo-2,6-dihydrobenzo[1:2-b,4:5-b']difuran. This dissolved in pyridine to give a blue solution having an absorption maximum at 645nm.

When applied to a polyester textile material from an aqueous dispersion it gave a reddish blue shade with good fastness to wet treatments.

### Example 5

The procedure of Example 1 was repeated except that the 2 .84g of 5-hydroxy-2-oxo-3-(4-acetylaminophenyl)-2,3-dihydrobenzo-furan was replaced by 2.26g of 5-hydroxy-2-oxo-3-phenyl-2,3-dihydro-benzofuran to give 3-phenyl-7-(3-methyl-4-aminophenyl)-2,6-dioxo-2,6-dihydrobenzo [1:2-b, 4:5-b']difuran. This dissolved in pyridine to give a blue solution having an absorption maximum at 620nm.

When applied to polyester from an aqueous dispersion it built up well to give a navy blue shades with good fastness to heat and wash treatments.

### Example 6

The procedure of Example 1 was repeated except that the 2.84g of 5-hydroxy-2-oxo-3-(4-acetylaminophenyl)-2,3-dihydrobenzo-furan was replaced by 3.0g of 5-hydroxy-2-oxo-3-(3-methyl-4-acetylaminophenyl)-2,3-dihydrobenzofuran and the 4.8g of 4-amino-3-methylphenyltartronic acid by 4.8g of 4-morpholino-phenyltartronic acid. The product, 3-(3-methyl-4-aminophenyl)-7-(4-morpholinophenyl)-2,6-dioxo-2,6-dihydrobenzo[1:2-b,4:5-b']-difuran, dissolves in pyridine to give a blue solution having an absorption maximum at 655nm.

When applied to polyester from an aqueous dispersion it gives bright blue shades with good heat fastness and wash treatments.

The 5-hydroxy-2-oxo-3(3-methyl-4-acetylaminophenyl)-2,3-hydrobenzofuran used in this Example was prepared by stirring 14g of 3-methyl-4-acetylaminomandelic acid with 6.9g of hydroquinone in 95ml of acetic acid and 5ml of 100% sulphuric acid at 80°C for 12 hours, cooling to ambient temperature and drowning into 1 litre of water. The precipitate was isolated by filtration, washed acid-free with water and dried.

### Example 7

The procedure of Example 6 was repeated except that in place of the 4.8g of 4-morpholinophenyltartronic acid there was used 4.0g of 4-amino-3-ethylphenyltartronic acid. The product, 3-(3-methyl-4-aminophenyl)-7-(3-ethyl-4-aminophenyl)-2,6-dioxo-2,6-dihydrobenzo-[1:2-b,4:5-b']difuran, dissolves in pyridine to give a blue solution having an absorption maximum at 660nm.

When applied to polyester from aqueous dispersions it gives bright blue shades with good fastness to heat and wash treatments.

### Example 8

The procedure of Example 1 was repeated except that the 4.8g of 4-amino-3-methylphenyltartronic acid was replaced by 3.9g of 4-N-isopropylamino-3-methylphenyltartronic acid. The product, 3-(4-aminophenyl)-7-(4-isopropylamino-3-methylphenyl)-2,6-dioxo-2,6-dihydrobenzo-[1:2-b,4:5-b']difuran, dissolves in pyridine to give a blue solution having an absorption maximum at 655nm.

When applied to polyester from aqueous dispersions it gives bright blue shades with good wet fastness and good heat fastness.

### Example 9

1.0g of the product obtained as in Example 1 was dissolved in a mixture of 25ml of methylethylketone and 10ml of acetic acid. 1.0g of sodium borohydride was added portionwise, the temperature rising to 50°C. After stirring for 1 hour a further 1.0g of sodium borohydride was added, the temperature again rising to 50°C. After 15 minutes the reaction was complete as judged by TLC.

The reaction mixture was poured into 250ml water and the precipitated product, 3-(4-sec-butylaminophenyl)-7-(4-sec-butylamino-3-methylphenyl)-2,6-dioxo-2,6-dihydrobenzo[1:2-b,4:5-b']difuran, isolated by filtration, washing with water and drying. It dissolves in pyridine to give a greenish-blue solution having an absorption maximum at 695nm.

When applied to polyester materials from aqueous dispersions it gives greenish-blue shades with good heat and wet fastness.

### Example 10

The procedure of Example 1 was repeated except that the 4.8g of 4-amino-3-methylphenyltartronic acid was replaced by 5.0g of 4-β-hydroxyethyl-3-methylphenyltartronic acid to give 3-(4-aminophenyl)-7-(4-8-hydroxyethylamino-3-methylphenyl)-2,6-dioxo-2,6-dihydrobenzo(1:2-b, 4:5-b']difuran. This dissolved in pyridine to give a blue solution having an absorption maximum at 670nm.

When applied to polyester materials from aqueous dispersions it gave blue shades with good heat and wet fastness.

### Example 11

The procedure of Example 1 was repeated except that the 4.8g of 4-amino-3-methylphenyltartronic acid was replaced by 4.6g of 4-amino-3,5-dimethylphenyltartronic acid to give 3-(4-aminophenyl)-7-(4-amino-3,5-dimethylphenyl)-2,6-dioxo-2,6-dihydrobenzo-[1:2-b,4:5-b']difuran. It dissolves in pyridine to give a blue solution having an absorption maximum at 662nm.

When applied to polyester materials it gave blue shades with good heat and wet fastness.

### Example 12

The procedure of Example 1 was repeated except that the 2.84g of 5-hydroxy-2-oxo-3-(4-acetylaminophenyl)-2,3-dihydrobenzofuran was replaced by 2.84g of 5-hydroxy-2-oxo-3(4-n-propoxyphenyl)-2,3-dihydrobenzofuran to give 3-(4-n-propoxyphenyl)-7-(4-amino-3-methyl phenyl)-2,6-dioxo-2,6-dihydrobenzo[1:2-b,4:5-b']difuran. It dissolves in pyridine to give a reddish-blue solution having an absorption maximum at 620nm.

When applied to polyester materials it builds up to give navy blue shades with good heat and wet fastness.

### Example 13

The procedure of Example 9 was repeated except that the 3.0g of 5-hydroxy-2-oxo-3(3-methyl-4-acetylaminophenyl)-2,3-dihydrobenzofuran was replaced by 2.84g of 5-hydroxy-2-oxo-3-(4-acetylaminophenyl)-2,3-dihydrobenzofuran to give 3-(4-aminophenyl)-7-(4-morpholinophenyl)-2,6-dioxo-2,6-dihydrobenzo[1:2-b,4:5-b']-difuran. This dissolves in ethylacetate to give a blue solution having an absorption maximum at 618nm.

When applied to polyester materials it gives reddish-blue shades with good heat and wet fastness.

### Example 14

The procedure of Example 1 was repeated except that the 4.8g of 4-amino-3-methylphenyltartronic acid was replaced by 4.8g of 4-amino-3-ethylphenyltartronic acid. The product, 3-(4-amino-phenyl)-7-(4-amino-3-ethylphenyl)-2,6-dioxo-2,6-dihydrobenzo-[1:2-b,4:5-b']difuran, dissolves in pyridine to give a blue shade having an absorption maximum at 657nm.

When a 50/50 mixture of this product and that of Example 1 was applied to polyester materials from aqueous dispersions it gave bright blue shades with good build up and good heat and wet fastness.

### Example 15

The procedure of Example 1 was repeated except that the 2.84g of 5-hydroxy-2-oxo-3-(4-acetylaminophenyl)-2,3-dihydrobenzo-furan was replaced by 3.0g of 5-hydroxy-2-oxo-3-(4-acetylamino-3-methylphenyl)-2,3-dihydrobenzofuran. The product, 3,7-di-(3-methyl-4-aminophenyl)-2,6-dioxo-2,6-dihydrobenzo[1:2-b,4:5-b']difuran, dissolves in pyridine to give a blue solution having an absorption maximum at 660nm.

When applied to polyester textile materials it gives bright blue shades with good heat fastness and good fastness to wash treatments.

### Example 16

The procedure of Example 5 was repeated except that the 4.8g of 4-amino-3-methylphenyltartronic acid was replaced by 4.4g of 4-amino-3,5-dimethylphenyltartronic acid to give 3-phenyl-7-(4-amino-3,5-dimethylphenyl)-2,6-dioxo-2,6-dihydrobenzo-[1:2-b,4:5-b']difuran. This dissolves in chloroform to give a reddish-blue shade having an absorption maximum at 580nm.

When applied to polyester materials it builds up to give navy blue shades with good heat and wet fastness.

### Example 17

The procedure of Example 5 was repeated except that the 4.8g of 4-amino-3-methylphenyltartronic acid was replaced by 4.6g of 4-amino-3-ethylphenyltartronic acid to give 3-phenyl-7-(3-ethyl-4-aminophenyl)-2,6-dioxo-2,6-dihydrobenzo-[1:2-b,4:5-b']difuran. This dissolves in chloroform to give a reddish-blue shade having an absorption maximum at 568nm.

When applied to polyester materials it builds up to give navy blue shades with good heat and wet fastness.

### Example 18

The procedure of Example 5 was repeated except that the 4.8g of 4-amino-3-methylphenyltartronic acid was replaced by 4.7g of 4-amino-3-n-propylphenyltartronic acid to give 3-phenyl-7-(3-n-propyl-4-aminophenyl)-2,6-dioxo-2,6-dihydrobenzo-[1:2-b,4:5-b']difuran. This dissolves in chloroform to give a reddish-blue shade having an absorption maximum at 568nm.

When applied to polyester materials it builds up to give navy blue shades with good heat and wet fastness.

### Example 19

The procedure of Example 5 was repeated except that the 4.8g of 4-amino-3-methylphenyltartronic acid was replaced by 4.5g of 4-amino-3-methoxyphenyltartronic acid to give 3-phenyl-7-(3-methoxy-4-aminophenyl)-2,6-dioxo-2,6-dihydrobenzo-[1:2-b,4:5-b']difuran. This dissolves in chloroform to give a reddish-blue shade having an absorption maximum at 600nm.

When applied to polyester materials it builds up to give navy blue shades with good heat and wet fastness.

### Example 20

The procedure of Example 5 was repeated except that the 4.8g of 4-amino-3-methylphenyltartronic acid was replaced by 5.3g of 4-amino-3-ethoxyphenyltartronic acid to give 3-phenyl-7-(3-ethoxy-4-aminophenyl)-2,6-dioxo-2,6-dihydrobenzo-[1:2-b,4:5-b']difuran. This dissolves in chloroform to give a reddish-blue shade having an absorption maximum at 600nm.

When applied to polyester materials it builds up to give navy blue shades with good heat and wet fastness.

### Example 21

The procedure of Example 5 was repeated except that the 4.8g of 4-amino-3-methylphenyltartronic acid was replaced by 5.5g of 4-amino-3-n-propoxyphenyltartronic acid to give 3-phenyl-7-(3-n-propoxy-4-aminophenyl)-2,6-dioxo-2,6-dihydrobenzo-[1:2-b,4:5-b']difuran. This dissolves in chloroform to give a reddish-blue shade having an absorption maximum at 605nm.

When applied to polyester materials it builds up to give navy blue shades with good heat and wet fastness.

### Example 22

The procedure of Example 5 was repeated except that the 4.8g of 4-amino-3-methylphenyltartronic acid was replaced by 5.0g of 3-methyl-4-N-ethylaminophenyltartronic acid to give 3-phenyl-7-(3-methyl-4-N-ethylaminophenyl)-2,6-dioxo-2,6-dihydrobenzo-[1:2-b,4:5-b']difuran. This dissolves in chloroform to give a reddish-blue shade having an absorption maximum at 620nm.

When applied to polyester materials it builds up to give navy blue shades with good heat and wet fastness.

The dyes identified in Tables 4 and 5 were prepared by the method of Example 1 using equivalent amounts of the substituted mandelic acid 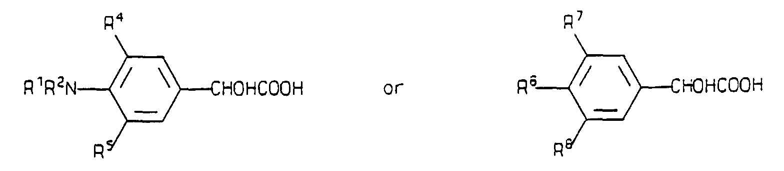 in place of the 4-acetylaminomandelic acid and of the substituted phenyl tartronic acid 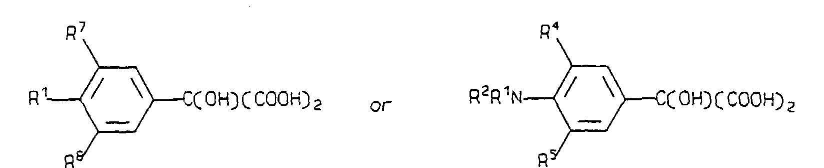 in place of 4-amino-3-methylphenyltartronic acid. In the case of the substituted mandelic acids in which R¹ and R² are H or R⁶ is NH₂, the amino group was protected with an acetyl group which was subsequently removed by acid hydrolysis as described in Example 1.

In Table 4 the dyes correspond to Formula VII in which X¹, X², R⁵ and R⁸ are all H and Z¹ and Z² are both 0.

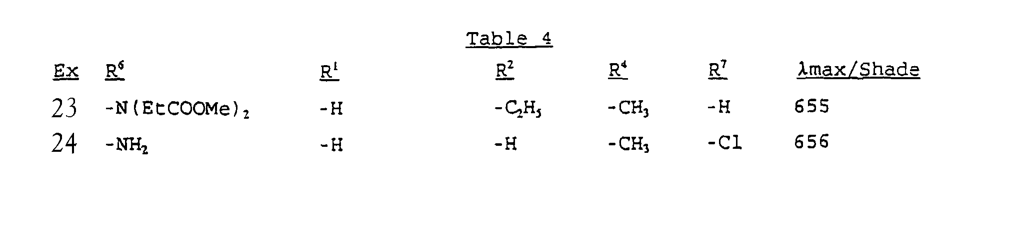

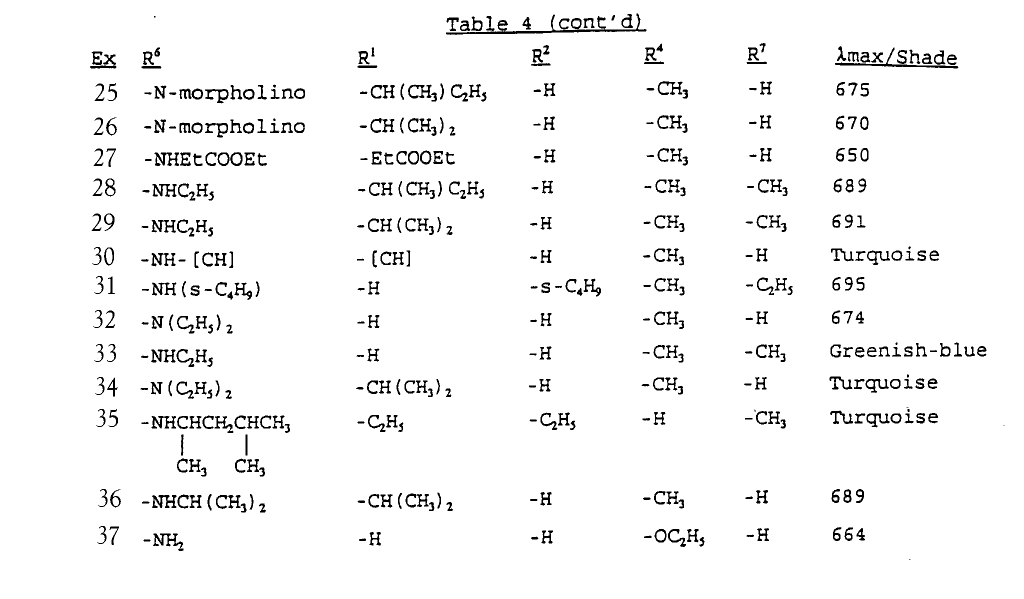

In Table 4 and the subsequent tables:

| | |
|---|---|
| -[CH] = cyclohexyl | Ph = phenyl |
| | -EtCOOMe = -C₂H₄CO₂CH₃ |
| -EtCOOEt = -C₂H₄CO₂C₂H₅ | -EtOCOMe = -C₂H₄OCOCH₃ |
| -OEtOEt = -OC₂H₅OC₂H₅ | -OEtOCOMe = -OC₂H₅OCOCH₃ |

In Table 5 the dye corresponds to Formula VII in which X¹, X², R⁵, R⁷ and R⁸ are all H and Z¹ and Z² are both O.

**Table 5**

| Ex | R⁶ | R¹ | R² | R⁴ | λmax/Shade |
|---|---|---|---|---|---|
| 38 | -CH₃ | -H | -H | -CH₃ | Raddish-blue |

Further dyes in accordance with Formula VII which can be made by the same process as the dyes in Tables 4 and 5 are shown in Tables 6, 7 and 8. In the dyes shown in Table 6 X¹, X², R⁵, R⁷ and R⁸ are all H and Z¹ and Z² are both O.

**Table 6**

| Ex | R⁶ | R⁴ | R¹ | R² |
|---|---|---|---|---|
| 39 | -H | -Cl | -H | -H |
| 40 | -H | -C₄ H₉ | -H | -H |
| 41 | -H | -CH₃ | -H | -C₂ H₄OH |
| 42 | -H | -CH₃ | -H | -C₂ H₄CN |
| 43 | -H | -CH₃ | -H | -C₂H₄Cl |
| 44 | -H | -C₂H₅ | -H | -EtOCOMe |
| 45 | -H | -C₂H₅ | -H | -EtCOOMe |
| 46 | -H | -CH₃ | -H | -C₂H₄OCH₃ |
| 47 | -H | -CH₃ | -H | -C₃ H₆-Ph |
| 48 | -H | -OC₄H ₉ | -H | -H |
| 49 | -H | -OEtOEt | -H | -H |
| 50 | -H | -OEtOCOMe | -H | -H |
| 51 | -H | -OC₂H ₄CN | -H | -H |
| 52 | -H | -OCH₃ | -H | -C₂H₄CN |
| 53 | -H | -OCH₃ | -H | -EtOCOMe |
| 54 | -H | -Br | -H | -C₂H₄OCH₃ |
| 55 | -CH₃ | -CH₃ | -H | -H |
| 56 | -C₂H₅ | -CH₃ | -H | -C₂H₃ |
| 57 | -Cl | -CH₃ | -H | -C₃H₇ |
| 58 | -H | -CH ₃ | -H | -C ₆ H ₁₃ |

In the dyes shown in Table 7 X¹, X², R⁵ and R⁸ are all H and Z¹ and Z² are both O.

**Table 7**

| Ex | R⁶ | R⁷ | R⁴ | R¹ | R² |
|---|---|---|---|---|---|
| 59 | -NH₂ | -Cl | -CH₃ | -H | -C₂H₅ |
| 60 | -NH₂ | -C₂H₅ | -CH₃ | -H | -C₂H₄CN |
| 61 | -N(C₂H₅)₂ | -H | -CH₃ | -H | -EtOCOMe |
| 62 | -NHC₂H₄OH | -CH₃ | -CH₃ | -H | -C₂H₄CN |
| 63 | -NH₂ | -H | -CH₃ | -H | -Ph |

In the dyes shown in Table 8 X¹ and X² are both H and Z¹ and Z² are both O.

**Table 8**

| Ex | R⁷ | R⁶ | R⁸ | R⁴ | R⁵ | R¹ | R² |
|---|---|---|---|---|---|---|---|
| 64 | -H | -NH₂ | -H | -CH₃ | -C₂H₅ | -H | -H |
| 65 | -Cl | -NH₂ | -Cl | -H | -H | -C₂H₅ | -H |
| 66 | -H | -H | -H | -C₂H₅ | -H | -H | -H |

## Claims

1. A compound of Formula VII: 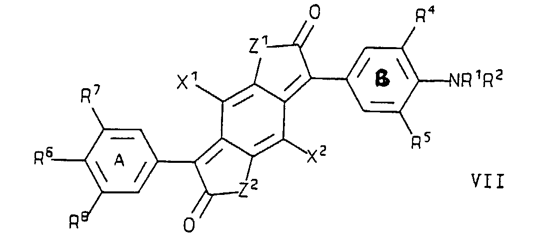 wherein:
X¹ and X² each independently is H, cyano, alkyl, aryl, carbamoyl, sulphamoyl, COOH or carboxylic acid ester;
Z¹ and Z² each independently is -O-, -S- or -NY- in which Y is H, an optionally-substituted hydrocarbon group or an acyl group;
one of R¹ and R² is H or an optionally substituted alkyl, alkenyl, cycloalkyl, aryl or aralkyl group;
the other of R¹ and R² is H;
R⁴ and R⁵ each independently is H, halogen or an optionally substituted alkyl, alkenyl or alkoxy group, provided that at least one of R⁴ and R⁵ is other than hydrogen; or
R¹ and R⁴ together with the N atom and the two carbon atoms in Ring B to which they are attached form a heterocycle fused to Ring B; or
R² and R⁵ together with the N atom and the two carbon atoms in Ring B to which they are attached form a heterocycle fused to Ring B;
R⁶ is H, halogen, a C₃₋₁₀-alkenyl group, an optionally substituted alkyl or alkoxy group or a group NR⁹R¹⁰ in which each of R⁹ and R¹⁰ independently is H or an optionally substituted alkyl, alkenyl, cycloalkyl, aryl or aralkyl groups; or
R⁹ and R¹⁰ together with the N atom to which they are attached form a heterocycle;
R⁷ and R⁸ each independently is H, halogen or an optionally substituted alkyl, alkenyl or alkoxy group, provided that when R⁷ or R⁸ is other than H, one of R⁹ and R¹⁰ is H ; or
R⁷ and R⁹ together with the N atom and the two carbon atoms in Ring A to which they are attached form a heterocycle fused to Ring A; or
R⁸ and R¹⁰ together with the N atom and the two carbon atoms in Ring A to which they are attached form a heterocycle fused to Ring A;
and where R⁶ is NR⁹R¹⁰, this may be the same as or different from the NR¹R² group present in Ring B.

2. A compound according to claim 1, wherein X¹ and X² are both hydrogen.

3. A compound according to claim 1 or claim 2, wherein Z¹ and Z² are both oxygen.

4. A compound according to any preceding claim, wherein R¹ is H, C₁₋₆-alkyl, C₃₋₄-alkenyl, cyclohexyl or C₁₋₄-alkyl substituted by a group selected from C₁₋₄-alkyl, C₁₋₄-alkoxy, C₁₋₄-alkoxy-C₁₋₄-alkoxy, nitro, cyano, halogen, cyclohexyl, phenyl, diphenyl, hydroxy, C₁₋₄-alkycarbonyl, amino C₁₋₄-alkoxycarbonyl, C₁₋₄-alkoxy-C₁₋₄-alkoxycarbonyl or C₁₋₄-alkoxycarbonyloxy.

5. A compound according to claim 4, wherein R⁴ is C₁₋₄-alkyl, C₃₋₄-alkenyl, C₁₋₁₀-alkoxy or halogen.

6. A compound according to any preceding claim, wherein R⁶ is NR⁹R¹⁰ in which R⁹ and R¹⁰ each independently is H, C₁₋₆-alkyl, C₃₋₄-alkenyl, cyclohexyl or C₁₋₄-alkyl substituted by a group selected from C₁₋₄-alkyl, C₁₋₄-alkoxy, C₁₋₄-alkoxy-C₁₋₄-alkoxy, nitro, cyano, halogen, cyclohexyl, phenyl, diphenyl, hydroxy, C₁₋₄-alkycarbonyl, amino C₁₋₄alkoxycarbonyl, C₁₋₄,-alkoxy-C₁₋₄-alkoxycarbonyl, C₁₋₄-alkoxycarbonyloxy or R⁹ and R¹⁰ together with the nitrogen atom to which they are attached form a piperidino or morpholino group.

7. A compound according to any one of claims 1 to 5, wherein R⁶ is H, C₁₋₁₀-alkyl, C₃₋₁₀-alkenyl, C₁₋₁₀-alkoxy or halogen.

8. A compound according to claim 7, wherein R⁶ is H, C₁₋₆-alkyl, C₃₋₄-alkenyl, C₁₋₁₀-alkoxy or halogen and R⁴ is C₁₋₄-alkyl or C₁₋₄-alkoxy.

9. A compound of the formula: 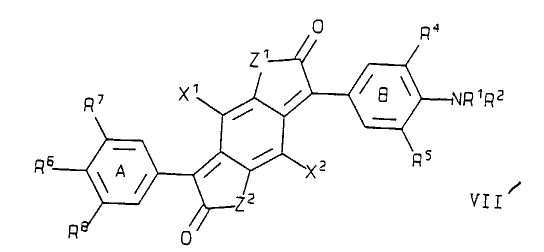 wherein X¹, X², R¹, R⁷ and R⁸ are H, Z¹ and Z² are oxygen, R² is H or C₁₋₄-alkyl, R⁴ is C₁₋₄-alkyl or C₁₋₄-alkoxy, R⁵ is H, C₁₋₄-alkyl or C₁₋₄-alkoxy and R⁶ is NH₂.

10. A compound of the formula: 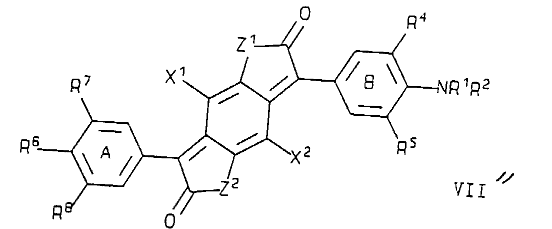 wherein X¹, X², R¹, R⁵, R⁷ and R⁸ are H, Z¹ and Z² are oxygen, R² is C₁₋₄-alkyl, R⁴ is C₁₋₄-alkyl or C₁₋₄-alkoxy and R⁶ is H, C₁₋₄-alkyl or C₁₋₄-alkoxy.

11. A compound:
3-(4-aminophenyl)-7-(3-methyl-4-aminophenyl)-2,6-dioxo-2,6-dihydrobenzo-[1:2-b,4:5-b']-difuran,
3-(4-aminophenyl)-7-(3-ethyl-4-aminophenyl)-2,6-dioxo-2,6-dihydrobenzo-[1:2-b,4:5-b']-difuran.
3-phenyl-7-(3-methyl-4-aminophenyl)-2,6-dioxo-2,6-dihydrobenzo-[1:2-b,4:5-b']-difuran,
3-phenyl-7-(3-ethyl-4-aminophenyl)-2,6-dioxo-2,6-dihydrobenzo-[1:2-b,4:S-b']-difuran,
3-phenyl-7-(3-methoxy-4-aminophenyl)-2,6-dioxo-2,6-dihydrobenzo-[1:2-b,4:5-b']-difuran,
3-phenyl-7-(3-ethoxy-4-aminophenyl)-2,6-dioxo-2,6-dihydrobenzo-[1:2-b,4:5-b']-difuran,
3-phenyl-7-(3-n-propoxy-4-aminophenyl)-2,6-dioxo-2,6-dihydrobenzo-[1:2-b,4:5-b']-difuran,
3-phenyl-7-(3-n-propyl-4-aminophenyl)-2,6-dioxo-2,6-dihydrobenzo-[1:2-b, 4:5-b']-difuran,
3-phenyl-7-(3-methyl-4-N-ethylaminophenyl)-2,6-dioxo-2,6-dihydrobenzo-[1:2-b,4:5-b']-difuran, or
3-(4-n-propoxyphenyl)-7-(3-methyl-4-aminophenyl)-2,6-dioxo-2,6-dihydrobenzo-[1:2-b, 4:5-b']-difuran.

## Patentansprüche

1. Verbindung der Formel VII: 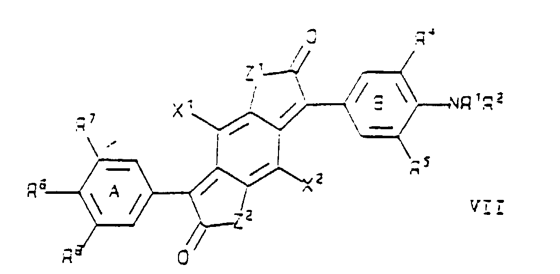 worin
X¹ und X² jeweils unabhängig voneinander H, Cyano, Alkyl, Aryl, Carbamoyl, Sulfamoyl, COOH oder Carbonsäureester sind;
Z¹ und Z² jeweils unabhängig voneinander -O-, -S- oder -NY- sind, worin Y = H, eine gegebenenfalls substituierte Kohlenwasserstoffgruppe oder eine Acylgruppe ist;
eines von R¹ und R² = H oder eine gegebenenfalls substituierte Alkyl-, Alkenyl-, Cycloalkyl-, Aryl- oder Aralkylgruppe ist;
das andere von R¹ und R² = H ist;
R⁴ und R⁵ jeweils unabhängig voneinander H, Halogen oder eine gegebenenfalls substituierte Alkyl-, Alkenyl- oder Alkoxygruppe sind, mit der Maßgabe, daß zumindest eines von R⁴ und R⁵ nicht Wasserstoff ist; oder
R¹ und R⁴ zusammen mit dem N-Atom und den beiden Kohlenstoffatomen in Ring B, an den sie gebunden sind, einen mit Ring B fusionierten Heterozyklus bilden; oder
R² und R⁵ zusammen mit dem N-Atom und den beiden Kohlenstoffatomen in Ring B, an den sie gebunden sind, einen mit Ring B fusionierten Heterozyklus bilden;
R⁶ = H, Halogen, eine C₃₋₁₀-Alkenylgruppe, eine gegebenenfalls substituierte Alkyl- oder Alkoxygruppe oder eine Gruppe NR¹R² ist, in der R⁹ und R¹⁰ jeweils unabhängig voneinander H oder eine gegebenenfalls substituierte Alkyl-, Alkenyl-, Cycloalkyl-, Aryl- oder Aralkylgruppe sind; oder
R⁹ und R¹⁰ zusammen mit dem N-Atom, an das sie gebunden sind, einen Heterozyklus bilden;
R⁷ und R⁸ jeweils unabhängig voneinander H, Halogen oder eine gegebenenfalls substituierte Alkyl-, Alkenyl- oder Alkoxygruppe sind, mit der Maßgabe, daß, wenn R⁷ oder R⁸ nicht H ist, eines von R⁹ und R¹⁰ = H ist; oder
R⁷ und R⁹ zusammen mit dem N-Atom und den beiden Kohlenstoffatomen in Ring A, an den sie gebunden sind, einen mit Ring A fusionierten Heterozyklus bilden; oder
R⁸ und R¹⁰ zusammen mit dem N-Atom und den beiden Kohlenstoffatomen in Ring A, an den sie gebunden sind, einen mit Ring A fusionierten Heterozyklus bilden;
und, wenn R⁶ = NR⁹R¹⁰ ist, diese die gleiche wie oder eine andere als die NR¹R²-Gruppe in Ring B ist.

2. Verbindung nach Anspruch 1, worin sowohl X¹ als auch X² Wasserstoff sind.

3. Verbindung nach Anspruch 1 oder 2, worin sowohl Z¹ als auch Z² Sauerstoff sind.

4. Verbindung nach einem der vorangegangenen Ansprüche, worin R¹ = H, C₁₋₆-Alkyl, C₃₋₄Alkenyl, Cyclohexyl oder C₁₋₄-Alkyl ist, das mit einer aus C₁₋₄-Alkyl, C₁₋₄-Alkoxy, C₁₋₄-Alkoxy-C₁₋₄-alkoxy, Nitro, Cyano, Halogen, Cyclohexyl, Phenyl, Diphenyl, Hydroxy, C₁₋₄-Alkylcarbonyl, Amino-C₁₋₄-alkoxycarbonyl, C₁₋₄-Alkoxy-C₁₋₄-alkoxycarbonyl oder C₁₋₄-Alkoxycarbonyloxy ausgewählten Gruppe substituiert ist.

5. Verbindung nach Anspruch 4, worin R⁴ = C₁₋₄-Alkyl, C₃₋₄-Alkenyl C₁₋₁₀-Alkoxy oder Halogen ist.

6. Verbindung nach einem der vorangegangenen Ansprüche, worin R⁶ = NR⁹R¹⁰ ist, worin R⁹ und R¹⁰ jeweils unabhängig voneinander H, C₁₋₆-Alkyl, C₃₋₄-Alkenyl, Cyclohexyl oder C₁₋₄-Alkyl sind, das mit einer aus C₁₋₄-Alkyl, C₁₋₄-Alkoxy, C₁₋₄-Alkoxy-C₁₋₄-alkoxy, Nitro, Cyano, Halogen, Cyclohexyl, Phenyl, Diphenyl, Hydroxy, C₁₋₄-Alkylcarbonyl, Amino-C₁₋₄-alkoxycarbonyl, C₁₋₄-Alkoxy-C₁₋₄-alkoxycarbonyl, C₁₋₄-Alkoxycarbonyloxy ausgewählten Gruppe substituiert ist, oder R¹ und R² zusammen mit dem Stickstoffatom, an das sie gebunden sind, eine Piperidino- oder Morpholinogruppe bilden.

7. Verbindung nach einem der Ansprüche 1 bis 5, worin R⁶ = H, C₁₋₁₀-Alkyl, C₃₋₁₀-Alkenyl, C₁₋₁₀-Alkoxy oder Halogen ist.

8. Verbindung nach Anspruch 7, worin R⁶ = H, C₁₋₆-Alkyl, C₃₋₄-Alkenyl, C₁₋₁₀-Alkoxy oder Halogen ist und R⁴ = C₁₋₄-Alkyl oder C₁₋₄-Alkoxy ist.

9. Verbindung der Formel 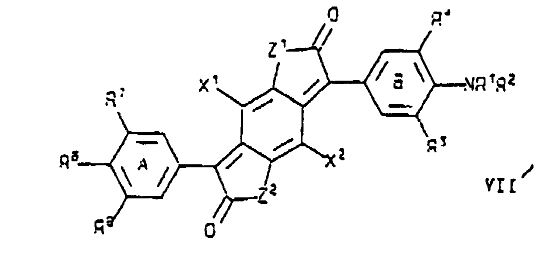 worin X¹, X², R¹, R⁷ und R⁸ = H sind, Z¹ und Z² Sauerstoff sind, R² = H oder C₁₋₄-Alkyl, R⁴ = C₁₋₄-Alkyl oder C₁₋₄-Alkoxy, R⁵ = H, C₁₋₄-Alkyl oder C₁₋₄-Alkoxy und R⁶ = NH₂ ist.

10. Verbindung der Formel 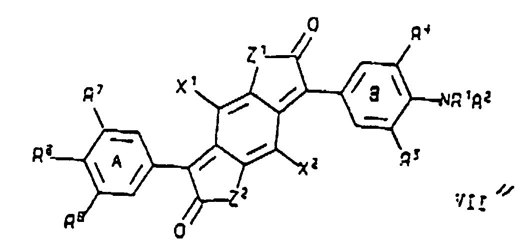 worin X¹, X², R¹, R⁵, R⁷ und R⁸ = H sind, Z¹ und Z² Sauerstoff sind, R² = C₁₋₄-Alkyl, R⁴ = C₁₋₄-Alkyl oder C₁₋₄-Alkoxy und R⁶ = H, C₁₋₄-Alkyl oder C₁₋₄-Alkoxy ist.

11. Verbindung:
3-(4-Aminophenyl)-7-(3-methyl-4-aminophenyl)-2,6-dioxo-2,6-dihydrobenzo-[1:2-b,4:5-b']-difuran,
3-(4-Aminophenyl)-7-(3-ethyl-4-aminophenyl)-2,6-dioxo-2,6-dihydrobebenzo-[1:2-b,4:5-b')-difuran,
3-Phenyl-7-(3-methyl-4-aminophenyl)-2,6-dioxo-2,6-dihydrobenzo-[1:2-b,4:5-b']-difuran,
3-Phenyl-7-(3-ethyl-4-aminophenyl)-2,6-dioxo-2,6-dihydrobenzo-[1:2-b,4:5-b']-difuran,
3-Phenyl-7-(3-methoxy-4-aminophenyl)-2,6-dioxo-2,6-dihydrobenzo-[1:2-b,4:5-b']-difuran,
3-Phenyl-7-(3-ethoxy-4-aminophenyl)-2,6-dioxo-2,6-dihydrobenzo-[1:2-b,4:5-b']-difuran,
3-Phenyl-7-(3-n-propoxy-4-aminophenyl]-2,6-d ioxo-2,6-dihydrobenzo-[1:2-b,4:5-b']-difuran,
3-Phenyl-7-(3-n-propyl-4-aminophenyl)-2,6-dioxo-2,6-dihydrobenzo-[1:2-b,4:5-b']-difuran,
3-Phenyl-7-(3-methyl-4-N-ethylaminophenyl)-2,6-dioxo-2,6-dihydrobenzo-[1:2-b,4:5-b']-difuran oder
3-(4-n-Propoxyphenyl )-7-(3-methyl-4-aminophenyl)-2,6-dioxo-2,6-dihydrobenzo-[1:2-b,4:5-b']-difuran.

## Revendications

1. Composé de la Formule VII: 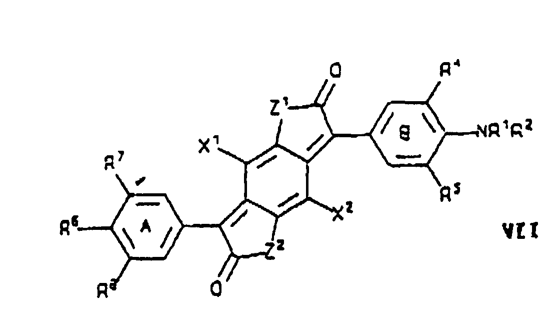 où:
X¹ et X² est chacun indépendamment H, cyano, alkyle, aryle, carbamoyle, sulphamoyle, COOH ou un ester d'acide carboxylique;
_{Z}1 et _{Z}2 est chacun indépendamment -O-, -S- ou -NY- où Y est H, un groupe hydrocarbure facultativement substitué ou un groupe acyle;
l'un de R¹ et R² est H ou un groupe alkyle, alcényle, cycloalkyle, aryle ou aralkyle facultativement substitué; l'autre de R¹ et R² est H;
R⁴ et R⁵ est chacun indépendamment H, halogène ou un groupe alkyle, alcényle ou alcoxy facultativement substitué à condition qu'au moins l'un de R⁴ et R⁵ soit autre qu'hydrogène; ou
R¹ et R⁴ avec l'atome N et les deux atomes de carbone dans le Cycle B auquel ils sont attachés forment un hétérocycle fusionné au Cycle B; ou
R² et R⁵ avec l'atome N et les deux atomes de carbone dans le Cycle B auquel ils sont attachés forment un hétérocycle fusionné au Cycle B;
R⁶ est H, halogène, un groupe alcényle C₃₋₁₀, un groupe alkyle ou alcoxy facultativement substitué ou un groupe NR¹R² dans lequel chacun de R⁹ et R¹⁰ est indépendamment H ou un groupe alkyle, alcényle, cycloalkyle, aryle ou aralkyle facultativement substitué; ou
R⁹ et R¹⁰ avec l'atome N auquel ils sont attachés forment un hétérocycle;
R⁷ et R⁸ chacun indépendamment est H, halogène ou un groupe alkyle, alcényle ou alcoxy, facultativement substitué à condition que quand R⁷ ou R⁸ est autre que H, l'un de R⁹ et R¹⁰ soit H; ou
R⁷ et R⁹ avec l'atome N et les deux atomes de carbone dans le Cycle A auquel ils sont attachés forment un hétérocycle fusionné au Cycle A; ou
R⁸ et R¹⁰ avec l'atome N et les deux atomes de carbone dans le Cycle A auquel ils sont attachés forment un hétérocycle fusionné au Cycle A;
et quand R⁶ est NR⁹R¹⁰, il peut être le même ou différent du groupe NR¹R² présent dans le Cycle B.

2. Composé selon la revendication 1, où X¹ et X² sont tous deux de l'hydrogène.

3. Composé selon la revendication 1 ou la revendication 2, où Z¹ et Z² sont tous deux de l'oxygène.

4. Composé selon toute revendication précédente, où R¹ est alkyle C₁₋₆, alcényle C₃₋₄, cyclohexyle ou alkyle C₁₋₄ substitué par un groupe sélectionné parmi alkyle C₁₋₄, alcoxy C₁₋₄, alcoxy C₁₋₄-alcoxy-C₁₋₄, nitro, cyano, halogène, cyclohexyle, phényle, diphényle, hydroxy, alkycarbonyle C₁₋₄, amino alcoxy carbonyle C₁₋₄, alcoxy C₁₋₄ alcoxycarbonyle C₁₋₄ ou alcoxycarbonyloxy C₁₋₄.

5. Composé selon la revendication 4, où R⁴ est alkyle C₁₋₄, alcényle C₃₋₄, alcoxy C₁₋₁₀ ou halogène.

6. Composé selon toute revendication précédente, où R⁶ est NR⁹R¹⁰ où R⁹ et R¹⁰ est chacun indépendamment H, alkyle C₁₋₆, alcényle C₃₋₄, cyclohexyle ou alkyle C₁₋₄ substitué par un groupe sélectionné parmi alkyle C₁₋₄, alcoxy C₁₋₄, alcoxy C₁₋₄-alcoxy C₁₋₄, nitro, cyano, halogène, cyclohexyle, phényle, diphényle, hydroxy, alcoxycarbonyle C₁₋₄, amino, alcoxycarbonyle C₁₋₄, alcoxy C₁₋₄ alcoxycarbonyle C₁₋₄, alcoxycarbonyloxy C₁₋₄ ou bien R¹ et R² avec l'atome d'azote auquel ils sont attachés forment un groupe pipéridino ou morpholino.

7. Composé selon l'une quelconque des revendications 1 à 5, où R⁶ est H, alkyle C₁₋₁₀, alcényle C₃₋₁₀, alcoxy C₁₋₁₀ ou halogène.

8. Composé selon la revendication 7, où R⁶ est H, alkyle C₁₋₆, alcényle C₃₋₄, alcoxy C₁₋₁₀ ou halogène et R⁴ est alkyle C₁₋₄ ou alcoxy C₁₋₄.

9. Composé de la formule: 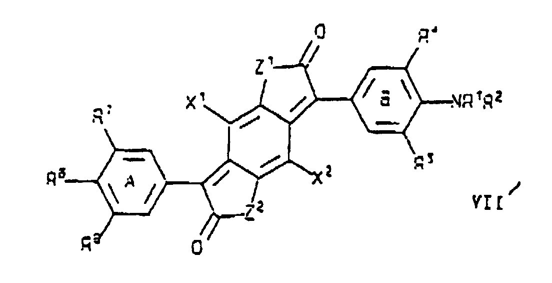 où X¹,X²,R¹,R⁷ et R⁸ sont H, Z¹ et Z² sont oxygène, R² est H ou alkyle C₁₋₄, R⁴ est alkyle C₁₋₄ ou alcoxy C₁₋₄, R⁵ est H, alkyle C₁₋₄ ou alcoxy C₁₋₄ et R⁶ est NH₂.

10. Composé de la formule: 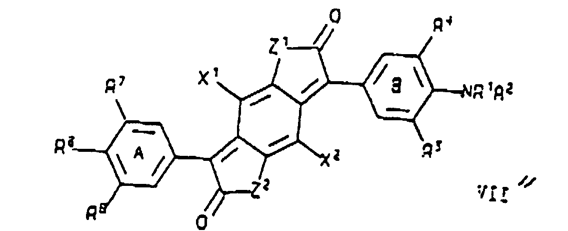 où X¹, X², R¹, R⁵, R⁷ et R⁸ sont H, Z¹ et Z² sont oxygène, R² est alkyle C₁₋₄, R⁴ est alkyle C₁₋₄ ou alcoxy C₁₋₄ et R⁶ est H, alkyle C₁₋₄ ou alcoxy C₁₋₄.

11. Un composé:
3-(4-aminophényl)-7-(3-méthyl-4-aminophényl)-2,6-dioxo-2,6-dihydro-benzo-[1:2-b,4:5-b']-difuranne
3-(4-aminophényl)-7-(3-éthyl-4-aminophényl)-2,6-dioxo-2,6-dihydro-benzo-[1:2-b,4:5-b']-difuranne
3-phényl-7-(3-méthyl-4-aminophényl)-2,6-dioxo-2,6-dihydrobenzo-[1:2-b,4:5-b']-difuranne,
3-phényl-7-(3-éthyl-4-aminophényl)-2,6-dioxo-2,6-dihydrobenzo-[1:2-b,4:5-b']-difuranne,
3-phényl-7-(3-méthoxy-4-aminophényl)-2,6-dioxo-2,6-dihydrobenzo-[1:2-b,4:5-b']-difuranne,
3-phényl-7-(3-éthoxy-4-aminophényl)-2,6-dioxo-2,6-dihydrobenzo-[1:2-b,4:5-b']-difuranne,
3-phényl-7-(3-n-propoxy-4-aminophényl)-2,6-dioxo-2,6-dihydrobenzo-[1:2-b,4:5-b']-difuranne,
3-phényl-7-(3-méthyl-4-N-éthylaminophényl)-2,6-dioxo-2,6-dihydrobenzo-[1:2-b, 4:5-b']-difuranne.
3-(4-n-propoxyphényl)-7-(3-méthyl-4-aminophényl)-2,6-dioxo-2,6-dihydrobenzo-[1:2-b, 4:5-b']-difuranne.
